# FASCICULE DE BREVET EUROPEEN

(11) **EP 2 434 003 B1**
(45) Date de publication et mention de la délivrance du brevet: **22.06.2016**
(21) Numéro de dépôt: 11181946.2
(22) Date de dépôt: 20.09.2011
(51) Int. Cl.: C10L 10/06, C10L 5/00, C10L 5/44, C10L 9/10

(54) **Composition solide de ramonage chimique**
Feste Zusammensetzung eines chemischen Schornsteinreinigungsmittels
Solid composition for chemical chimney-cleaning

(30) Priorité: 23.09.2010 BE 201000566
(43) Date de publication de la demande: 28.03.2012
(73) Titulaire: Chembo S.A., 7522 Blandain (BE)
(72) Inventeur: Legrain, Olivier, 7522 Blandain (BE)
(74) Mandataire: Office Kirkpatrick

(56) Documents cités:
- EP-A1- 0 837 121
- EP-A1- 1 148 113
- WO-A1-2006/008544
- FR-A1- 2 800 745
- US-A- 5 427 805
- US-A1- 2009 107 036
- US-B2- 7 540 890

## Description

L'invention se rapporte à une composition solide de ramonage chimique des conduits de fumée.

Les conduits de fumée nécessitent un entretien régulier qui permet d'éviter les accidents dus à l'inflammabilité des dépôts et des résidus de suie et de goudron. Alors que le ramonage mécanique est une intervention permettant d'éliminer efficacement les dépôts de suie, elle reste une opération contraignante et coûteuse. Depuis de nombreuses années plusieurs méthodes de ramonage chimique se sont développées comme alternatives pouvant être utilisées seules ou en complément d'un ramonage mécanique et qui permettent d'obtenir une bonne élimination des dépôts de combustions.

Les actifs chimiques couramment utilisés sont généralement des compositions commercialisées sous forme de poudre ou incorporées dans un solide ayant la forme de bûche ou de brique. Ces produits permettent de faciliter l'élimination des dépôts de combustion tel que la suie et les goudrons par une action chimique qui fragilise les dépôts et les rendent friables facilitant ainsi l'élimination des dépôts de combustion.

### État de la technique

L'utilisation d'un produit de ramonage tel qu'une poudre de ramonage présente toutefois de nombreux inconvénients. En effet, lorsque ces poudres sont introduites dans un foyer, elles libèrent très rapidement les actifs sous forme de vapeurs. Une action aussi rapide ne permet pas d'obtenir d'aussi bons résultats qu'une action prolongée dans le temps.

On connaît du document US 2,777,761 des compositions sous forme d'un mélange de poudre de faible densité, inférieure à 0,4 et comprenant un actif chimique tel que des sels d'ammonium, des sels de cuivre (20 mesh ; 1 mm) et de la sciure de bois (100 mesh ; 0,165 mm). De par la faible densité de la poudre, lorsque celle-ci est introduite dans un foyer, les poudres seront facilement entraînées dans le conduit de fumée. En se consumant, les constituants chimiques de la poudre vont être libérés et agir sur les dépôts de suie et de goudron. Pour être efficace cette composition doit avoir une volatilité élevée et agir rapidement sur les dépôts de combustion; or une action prolongée dans le temps permet d'obtenir une meilleure élimination des dépôts de suie.

On connaît du document FR 2 554 458 l'emploi de composition combustible solide sous différentes formes en briquette ou en granulés obtenue par l'agglomération d'un mélange d'actifs chimiques et d'un support combustible sous une pression élevée. Cette compression à pression élevée permet de retarder la combustion de la composition solide. L'utilisation de ce produit permet d'obtenir un dégagement de vapeur lent et continu mais ne permet pas d'obtenir une élimination des suies satisfaisantes compte tenu de la faible quantité d'agents actifs utilisés.

Il est connu de EP 1 148 113 un élément combustible solide comprenant un espace interne dans lequel est placé un actif chimique permettant l'élimination des suies.

Il est connu de WO 2006/008544 une bûche artificielle combustible comprenant un matériau particulaire combustible, un liant, une pluralité de granulés destinés à produire un son de crépitement ainsi que des additifs chimiques destinés à produire une flamme colorée. Les granulés sont des graines telles que des graines de marron de moutarde qui constituent entre 1 et 10 % en poids de la bûche. Les additifs chimiques sont composés de sulfate de cuivre et du chlorure d'ammonium.

Le document FR 2 800 745 concerne l'utilisation d'une composition solide comprenant une quantité plus importante d'actif chimique qui peut être supérieure à 40 % en poids de la composition de la bûche. Un support combustible et un liant tel que la paraffine et/ou l'acide stéarique sont toutefois nécessaires pour obtenir une composition présentant une cohésion suffisante. La combustion doit alors être maintenue de telle sorte que l'on puisse obtenir une combustion qui permet une libération progressive des actifs chimiques.

La quantité importante de liant utilisée dans cette composition et en particulier la paraffine présente plusieurs inconvénients. En particulier, le liant accroît la vitesse de combustion de la bûche ce qui réduit ainsi son efficacité. De plus une combustion incomplète du liant engendre un dépôt de suie supplémentaire non négligeable.

Le document US 7,540,890 concerne une composition solide homogène composé d'un support solide combustible, d'un agent chimique et/ou catalytique et ne contenant pas de liants. Le produit est obtenu en appliquant une pression élevée de l'ordre de 10,000 à 20,000 psi (70 à 140 MPa) ce qui permet d'obtenir une émission progressive et continue des actifs chimiques lors de la combustion. Un document similaire, EP 1 254 946 décrit l'utilisation d'une composition solide de ramonage chimique constitué d'un agrégat de combustible solide et de poudre ou cristaux d'agents actifs. Le produit pouvant être obtenu par compression à une pression supérieure à 2 MPa. Cette composition permet d'obtenir un ramonage plus efficace, notamment dans les zones plus froides du conduit de cheminée.

Les compositions solides de ramonage chimique telles que décrites dans ces deux derniers documents permettent d'éliminer les dépôts de suie et de goudron par un dégagement lent et continu de vapeur de sels d'actifs sur une durée prolongée. Toutefois pour être efficace l'utilisation de ces produits nécessite une quantité d'actif chimique importante.

L'inventeur a mis en évidence qu'au cours de la combustion de la composition solide, une libération de vapeur de sel d'actifs chimiques continue et dont l'intensité peut varier apporte de meilleurs résultats qu'une libération continue d'actifs chimiques.

Cette intensité variable peut être obtenue lors de la vaporisation des actifs en combinant un dégagement de vapeur lent et continu d'actifs chimiques avec un dégagement ponctuel plus important de vapeur, ce qui permet de modifier l'intensité de la libération des sels d'actifs. Cette caractéristique permet d'augmenter l'efficacité du ramonage chimique et/ou de réduire la quantité d'actif utilisée.

### Résumé de l'invention

Un but de l'invention est d'améliorer l'efficacité du ramonage chimique. La présente invention a pour objet une composition combustible solide, permettant d'améliorer l'efficacité des compositions actuelles. L'invention porte également sur un procédé et l'utilisation de ce produit.

A cette fin, la composition combustible solide de ramonage chimique éliminant la suie et les dépôts goudronneux des conduits de fumée selon l'invention comprend des agents chimiques comprenant au moins un sel métallique choisi parmi les sulfates et les chlorures de cuivre ou de zinc et au moins un sel d'ammonium choisi parmi le chlorure et le sulfate d'ammonium incorporés dans une matrice solide comprenant des particules combustibles et se caractérise en ce que les agents chimiques se trouvent sous forme de granulés et de poudre, la composition comprenant de 15 à 30 % en poids de poudre, de 5 à 30 % en poids de granulés et de 60 à 80 % en poids de particules combustibles, lesdits granulés et poudre étant répartis de manière homogène dans la matrice solide.

Au sens de l'invention, on entend par granulé un produit sous la forme d'un grain dont les dimensions sont de l'ordre de un à quelques millimètres et obtenu par l'agglomération de plusieurs constituants.

La présente invention peut se présenter sous différentes formes en particulier sous l'aspect d'une bûche ou d'une brique.

L'invention se rapporte aussi à un procédé de fabrication d'une composition combustible solide comprenant les étapes suivantes :
a. mélange jusqu'à homogénéité de la composition de poudre, granulés et particules combustibles
b. compression du mélange, de préférence à froid.

Avantageusement, on peut maintenir un taux d'humidité compris entre 8 et 12 % pour permettre une compression optimale. La pression est choisie entre 25 et 30 MPa.

L'invention concerne également l'utilisation d'une composition solide dans le but d'éliminer les dépôts de combustion. Cette utilisation consiste à placer ladite composition solide dans un foyer actif et de maintenir la combustion de la composition solide.

Selon l'un des modes de réalisation, le dégagement de vapeur continu et lent est produit par la sublimation et/ou la dégradation des sels d'actifs chimiques utilisés sous forme de poudre et/ou de cristaux répartis de façon homogène dans la composition. Les dégagements ponctuels de vapeur de plus forte intensité sont obtenus en incorporant et en répartissant de façon homogène dans la composition solide des granulés contenant une concentration importante en actifs chimiques, de l'ordre de 55 à 95 %, ou avantageusement comprise entre 55 et 80 % en poids du granulé. De cette façon, la libération des vapeurs d'actifs se produit en des positions isolées et localisées. La composition des actifs chimiques sous la forme de granulés et de poudres peut être différente ou identique.

Les granulés sont composés d'actifs chimiques, de composés combustibles particulaires et d'un liant.

De préférence l'actif chimique du granulé comprend un mélange sous forme de poudre et/ou de cristaux d'au moins un sel d'ammonium comme le chlorure d'ammonium ou le sulfate d'ammonium et d'un ou de plusieurs sels métalliques à l'exclusion des sels de métaux alcalins et alcalino-terreux. De préférence, les sels métalliques sont sels de cuivre et/ou de zinc parmi lesquels les sulfates de cuivre, les sulfates de zinc, les chlorures de cuivre et/ou les chlorures de zinc. De préférence, l'actif se compose de 5 à 15 % de sels de cuivre, de préférence du sulfate de cuivre éventuellement pentahydraté, de 5 à 15 % de sels de zinc, de préférence du sulfate de zinc éventuellement heptahydraté et de 30 à 60 % de chlorure d'ammonium. Les % sont relatifs au poids total du granulé.

De préférence, l'actif sous forme de granulé se compose de 5 à 15 % en poids de sulfate de cuivre, de 5 à 15 % en poids de sulfate de zinc, de 30 à 60 % en poids de chlorure d'ammonium, les % sont relatifs au poids total des granulés.

Les composés combustibles particulaires entrant dans la composition du granulé peuvent être constitués de dérivés cellulosiques tels que de la sciure de bois, de préférence dans des proportions comprises entre 5 et 15 % ou plus avantageusement entre 6 et 9 % en poids du total des granulés.

Le granulé comprend un liant, dont la proportion peut être comprise entre 5 et 45 % en poids du granulé et peut être composé d'amylacé tel que de la farine de blé, de maïs, ou de l'amidon et/ou de l'acide oléique et/ou du glycérol et/ou de la stéarine et/ou du polycaprolactone. Les liants préfères sont le glycérol, la stéarine, les acides gras et/ou le polycaprolactone. Selon un mode de réalisation le granulé peut contenir des liants dans les proportions suivantes : entre 1 et 4 % en poids du total des granulés d'acide oléique, de 10 à 30 % en poids du total des granulés de farine de blé, de maïs, ou de l'amidon, de 1 à 10 % en poids du total des granulés de glycérol, de 10 à 20 % en poids du total des granulés de stéarine et de 5 à 15 % ou plus avantageusement entre 6 et 9 % en poids du total des granulés de polycaprolactone.

Des ingrédients complémentaires peuvent entrer dans la composition des granulés, tel que des émulsionnants comme le lauryl sulfate de sodium.

Selon un mode de réalisation La granulation est obtenue par compression d'un mélange de poudres et éventuellement de liants, entre une filière en rotation et des rouleaux fixes dont l'écartement permet d'ajuster la compression permettant l'expulsion des granulés au travers de la filière et permet d'obtenir des éléments extrudés de dimension variable. La granulométrie varie entre 2 et 16 mm, les granulés d'une taille comprise entre 4 et 8 mm sont toutefois préférés.

La composition combustible solide contient également une poudre chimique mélangée de façon homogène dans la matrice solide. La poudre est composée d'un mélange de poudre et/ou de cristaux d'un ou de plusieurs sel d'ammonium, dont le chlorure d'ammonium et d'un ou de plusieurs sels métalliques à l'exclusion des sels de métaux alcalins et alcalino-terreux.

La poudre comprend de 5 à 15 % en poids de sels de cuivre, de 5 à 15 % en poids de sels de zinc, de 30 à 60 % en poids de chlorure d'ammonium. De préférence, les sels métalliques sont des sulfates de cuivre, des sulfates de zinc, des chlorures de cuivre et/ou des chlorures de zinc.

De préférence, la poudre comprend de 5 à 15 % en poids de sulfate de cuivre éventuellement pentahydraté, de 5 à 15 % en poids de sulfate de zinc éventuellement heptahydraté et de 30 à 60 % poids de chlorure d'ammonium. Du sulfate d'ammonium est éventuellement ajouté à la composition de la poudre, dans des proportions variant entre 0 et 10 %, préférentiellement entre 5 et 10%, ou mieux encore entre 6 et 8 % en poids total de la poudre.

On peut également ajouter dans la poudre une quantité optionnelle de stéarine comprise entre 10 et 30 % en poids, avantageusement comprise entre 15 et 18 % en poids total de la poudre.

Additionnellement, d'autres ingrédients comme des colorants peuvent être ajoutés à l'invention.

La formulation du granulé de ramonage comprend avantageusement les ingrédients suivants :

| % en poids | Formule 1 | Formule 2 | Formule 3 |
|---|---|---|---|
| Chlorure d'ammonium | 60,00 | 70,00 | 80,00 |
| Sulfate de cuivre | 6,25 | 6,25 | 6,25 |
| Sulfate de zinc | 6,25 | 6,25 | 6,25 |
| Polycaprolactone | 6,00 | 6,00 | 6,00 |
| Lauryl sulfate de sodium | 2,00 | 2,00 | 1,50 |
| Stéarine | 2,00 | 2, 00 | 0,00 |
| Glycérol | 3, 00 | 2, 00 | 0,00 |
| Farine de blé | 14,50 | 5,50 | 0,00 |
| Total | 100,00 | 100,00 | 100,00 |

De préférence la composition solide est sous forme de brique de dimension varient de 150 x 60 x 40 mm³ à 150 x 60 x 110 mm³ pour un poids compris entre 800 et 1200g. Selon un mode de réalisation, le produit est avantageusement constitué de 60 à 80 % en poids de particules combustibles solides sous la forme de sciure de bois de différentes essences (hêtre, chêne, résineux, bois exotique ...) dont l'humidité est avantageusement comprise entre 6 et 12 %, de 15 à 30 % en poids de poudre comprenant des actifs chimiques et de 5 à 30 % en poids de granulés comprenant des actifs chimiques.

Une brique de ramonage obtenue selon l'invention comprenant des poudres et des granulés d'actifs chimiques est placée dans un foyer. En se consumant, la brique de ramonage permet une élimination des suies plus efficace que celle apportée par les bûches de ramonage ne comprenant que des poudres. Selon l'inventeur, les poudres d'actifs chimiques permettent l'assèchement progressif des suies et lors de leur dégradation, les granulés d'actifs chimiques contribuent à un apport complémentaire qui favoriserait le décrochage des dépôts de suie.

## Revendications

1. Composition combustible solide de ramonage chimique éliminant la suie et les dépôts goudronneux des conduits de fumée comprenant des agents chimiques comprenant au moins un sel métallique choisi parmi les sulfates et les chlorures de cuivre ou de zinc et au moins un sel d'ammonium choisi parmi le chlorure et le sulfate d'ammonium incorporés dans une matrice solide comprenant des particules combustibles, **caractérisée en ce que** les agents chimiques se trouvent sous forme de granulés et de poudre, la composition comprenant de 15 à 30 % en poids de poudre, de 5 à 30 % en poids de granulés et de 60 à 80 % en poids de particules combustibles, lesdits granulés et poudre étant répartis de manière homogène dans la matrice solide et les pourcentages sont relatifs au poids total de la composition.

2. Composition combustible solide selon l'une quelconque des revendications précédentes **caractérisée en ce que** les granulés ont une taille comprise entre 2 et 16 mm de préférence entre 4 et 8 mm.

3. Composition combustible solide selon l'une quelconque des revendications précédentes **caractérisée en ce qu'**elle comprend de 60 à 80 % en poids de particules combustibles et de 5 à 30 % en poids de granulés, les % étant relatifs au poids total de la composition.

4. Composition combustible solide selon l'une quelconque des revendications précédentes **caractérisée en ce que** les granulés comprennent au moins un liant.

5. Composition combustible solide selon l'une quelconque des revendications précédentes **caractérisée en ce que** les granulés comprennent au moins un liant choisi parmi l'acide oléique, un composé amylacé, la farine de blé, la farine de maïs, le glycérol, la stéarine, le polycaprolactone ou toutes leurs combinaisons.

6. Composition combustible solide selon l'une quelconque des revendications précédentes **caractérisée en ce que** la poudre comprend de 5 à 15 % en poids de sels de cuivre, de 5 à 15 % en poids de sels de zinc, de 30 à 60 % en poids de chlorure d'ammonium, les % étant relatifs au poids total de la poudre.

7. Composition combustible solide selon l'une quelconque des revendications précédentes **caractérisée en ce que** les granulés comprennent de 5 à 15 % en poids de sulfate de cuivre, de 5 à 15 % en poids de sulfate de zinc, de 30 à 60 % en poids de chlorure d'ammonium, les % sont relatifs au poids total des granulés.

8. Composition combustible solide selon l'une quelconque des revendications précédentes **caractérisée en ce que** les granulés comprennent de 10 à 30 % en poids d'amidon ou de farine de blé ou de farine de maïs, de 1 à 10 % en poids de glycérol, de 10 à 20 % en poids de stéarine, de 5 à 15 % en poids de polycaprolactone de préférence de 6 à 9 % en poids, de 5 à 15 % de sciure de bois, optionnellement la composition contient de 1 à 4 % en poids d'acide oléique, les % sont relatifs au poids total des granulés.

9. Composition combustible solide selon l'une quelconque des revendications précédentes **caractérisée en ce que** les particules combustibles comprennent de la sciure de bois.

10. Procédé de fabrication d'une composition combustible solide selon la revendication 1 comprenant les étapes de :
a. mélange jusqu'à homogénéité de la composition de poudre, granulés et particules combustibles
b. compression du mélange.

11. Procédé de fabrication d'une composition combustible solide selon la revendication 10, **caractérisé en ce que** l'étape b est une compression à froid.

12. Procédé de fabrication d'une composition combustible solide selon la revendication 10, **caractérisé en ce que** la pression est comprise entre 25 et 30 MPa.

## Patentansprüche

1. Feste brennbare Zusammensetzung zur chemischen Schornsteinreinigung, die Ruß und teerhaltige Ablagerungen von Rauchrohren eliminiert und die chemische Substanzen umfasst, die mindestens ein Metallsalz, das aus Kupfer- oder Zinksulfaten und -chloriden ausgewählt ist, und mindestens ein Ammoniumsalz umfassen, das aus Ammoniumchlorid und -sulfat ausgewählt ist, die in eine feste Matrix eingebunden sind, die brennbare Teilchen umfasst, **dadurch gekennzeichnet, dass** die chemischen Substanzen in der Form von Granulat und Pulver vorliegen, wobei die Zusammensetzung 15 bis 30 Gew.-% Pulver, 5 bis 30 Gew.-% Granulat und 60 bis 80 Gew.-% brennbare Teilchen umfasst, wobei das Granulat und das Pulver homogen in der festen Matrix verteilt sind und die Prozentanteile sich auf das Gesamtgewicht der Zusammensetzung beziehen.

2. Feste brennbare Zusammensetzung nach einem der vorhergehenden Ansprüche, **dadurch gekennzeichnet, dass** das Granulat eine Größe zwischen 2 und 16 mm, vorzugsweise zwischen 4 und 8 mm aufweist.

3. Feste brennbare Zusammensetzung nach einem der vorhergehenden Ansprüche, **dadurch gekennzeichnet, dass** sie 60 bis 80 Gew.-% brennbare Teilchen und 5 bis 30 Gew.-% Granulat umfasst, wobei die Prozentanteile sich auf das Gesamtgewicht der Zusammensetzung beziehen.

4. Feste brennbare Zusammensetzung nach einem der vorhergehenden Ansprüche, **dadurch gekennzeichnet, dass** das Granulat mindestens ein Bindemittel umfasst.

5. Feste brennbare Zusammensetzung nach einem der vorhergehenden Ansprüche, **dadurch gekennzeichnet, dass** das Granulat mindestens ein Bindemittel umfasst, das aus Ölsäure, einer stärkehaltigen Verbindung, Weizenmehl, Maismehl, Glycerin, Stearin, Polycaprolacton oder allen deren Kombinationen ausgewählt ist.

6. Feste brennbare Zusammensetzung nach einem der vorhergehenden Ansprüche, **dadurch gekennzeichnet, dass** das Pulver 5 bis 15 Gew.-% Kupfersalze, 5 bis 15 Gew.-% Zinksalze und 30 bis 60 Gew.-% Ammoniumchlorid umfasst, wobei die Prozentanteile sich auf das Gesamtgewicht des Pulvers beziehen.

7. Feste brennbare Zusammensetzung nach einem der vorhergehenden Ansprüche, **dadurch gekennzeichnet, dass** das Granulat 5 bis 15 Gew.-% Kupfersulfat, 5 bis 15 Gew.-% Zinksulfat und 30 bis 60 Gew.-% Ammoniumchlorid umfasst, wobei die Prozentanteile sich auf das Gesamtgewicht des Granulats beziehen.

8. Feste brennbare Zusammensetzung nach einem der vorhergehenden Ansprüche, **dadurch gekennzeichnet, dass** das Granulat 10 bis 30 Gew.-% Stärke oder Weizenmehl oder Maismehl, 1 bis 10 Gew.-% Glycerin, 10 bis 20 Gew.-% Stearin, 5 bis 15 Gew.-% Polycaprolacton, vorzugsweise 6 bis 9 Gew.-%, und 5 bis 15 Gew.-% Sägemehl umfasst, gegebenenfalls wobei die Zusammensetzung 1 bis 4 Gew.-% Ölsäure enthält, wobei die Prozentanteile sich auf das Gesamtgewicht des Granulats beziehen.

9. Feste brennbare Zusammensetzung nach einem der vorhergehenden Ansprüche, **dadurch gekennzeichnet, dass** die brennbaren Teilchen Sägemehl umfassen.

10. Verfahren zur Herstellung einer festen brennbaren Zusammensetzung nach Anspruch 1, das die folgenden Schritte umfasst:
a. Mischen der Zusammensetzung von Pulver, Granulat und brennbaren Teilchen bis zur Homogenität,
b. Verpressen des Gemischs.

11. Verfahren zur Herstellung einer festen brennbaren Zusammensetzung nach Anspruch 10, **dadurch gekennzeichnet, dass** der Schritt b eine Kaltverpressung ist.

12. Verfahren zur Herstellung einer festen brennbaren Zusammensetzung nach Anspruch 10, **dadurch gekennzeichnet, dass** der Druck zwischen 25 und 30 MPa liegt.

## Claims

1. A solid combustible composition for chemical chimney cleaning eliminating soot and tarry deposits from flues, comprising chemical agents comprising at least one metallic salt chosen from among copper or zinc sulfates and chlorides and at least one ammonium salt chosen from among ammonium chloride and sulfate incorporated into a solid matrix comprising combustible particles, **characterized in that** the chemical agents are in the form of granules and powder, the composition comprising from 15 to 30 wt% of powder, from 5 to 30 wt% of granules and from 60 to 80 wt% of combustible particles, said granules and powder being distributed homogenously in the solid matrix and the percentages being relative to the total weight of the composition.

2. The solid combustible composition according to any one of the preceding claims, **characterized in that** the granules have a size comprised between 2 and 16 mm, preferably between 4 and 8 mm.

3. The solid combustible composition according to any one of the preceding claims, **characterized in that** it comprises from 60 to 80 wt% of combustible particles and from 5 to 30 wt% of granules, the percentages being relative to the total weight of the composition.

4. The solid combustible composition according to any one of the preceding claims, **characterized in that** the granules comprise at least one binder.

5. The solid combustible composition according to any one of the preceding claims, **characterized in that** the granules comprise at least one binder chosen from among oleic acid, a starchy compound, wheat flour, corn flour, glycerol, stearin, polycaprolactone, or any combination thereof.

6. The solid combustible combination according to any one of the preceding claims, **characterized in that** the powder comprises from 5 to 15 wt% of copper salts, from 5 to 15 wt% of zinc salts, from 30 to 60 wt% of ammonium chloride, the percentages being relative to the total weight of the powder.

7. The solid combustible composition according to any one of the preceding claims, **characterized in that** the granules comprise from 5 to 15 wt% of copper sulfate, from 5 to 15 wt% of zinc sulfate, from 30 to 60 wt% of ammonium chloride, the percentages being relative to the total weight of the granules.

8. The solid combustible composition according to any one of the preceding claims, **characterized in that** the granules comprise from 10 to 30 wt% of starch or wheat flour or corn flour, from 1 to 10 wt% of glycerol, from 10 to 20 wt% of stearin, from 5 to 15 wt% of polycaprolactone, preferably from 6 to 9 wt%, from 5 to 15% of sawdust, the composition optionally containing from 1 to 4 wt% of oleic acid, the percentages being relative to the total weight of the granules.

9. The solid combustible composition according to any one of the preceding claims, **characterized in that** the combustible particles comprise sawdust.

10. A method for manufacturing a solid combustible composition according to claim 1, comprising the following steps:
a. mixing the composition of powder, granules and combustible particles until they are homogenous,
b. compressing the mixture.

11. The method for manufacturing a solid combustible composition according to claim 10, **characterized in that** step b is a cold compression.

12. The method for manufacturing a solid combustible composition according to claim 10, **characterized in that** the pressure is comprised between 25 and 30 MPa.
